# EUROPEAN PATENT APPLICATION

(11) **EP 4 708 637 A1**
(43) Date of publication of application: **11.03.2026**
(21) Application number: 25196046.4
(22) Date of filing: 14.08.2025
(51) Int. Cl.: H02K 1/276

(54) **ROTOR FOR HOLLOW SHAFT MOTOR**

(30) Priority: 27.08.2024 CN 202411186020
(71) Applicant: Choi, Kwangho, Seoul 06506 (KR)
(72) Inventor: CHOI, Kwangho, 06506 Seoul (KR); KIM, Beomlae, Anseong-si, Gyeonggi-do 17521 (KR)
(74) Representative: Gulde & Partner

(57) **Abstract**

A rotor of a hollow shaft motor according to the present invention comprises: a rotor core 110 having a plurality of magnets 130; and a hollow shaft housing 120 formed around the rotor core 110 by a metal melt by placing the rotor core 110 in a die-casting mold.

## Description

### Technical field

The present invention relates to a hollow shaft motor. More specifically, the present invention relates to a rotor for a hollow shaft motor having a structure suitable to be manufactured by die casting.

### Background art

In general, the force acting on a brake in a brake system is derived from a pressure generated in a master cylinder. In order to generate pressure in the master cylinder of the brake system, the use of an electric motor has been a widely used technology. The electric motor is commonly referred to as a hollow shaft motor because the motor rotates a hollow shaft with a hollow interior, and includes a ball screw which is coupled to the hollow shaft and rotates together inside the hollow shaft, and a ball nut which vertically moves by the rotation of the ball screw.

As disclosed in Korean Patent No. 10-2190270, a rotor of a conventional hollow shaft motor includes a cylindrical hollow shaft housing with a hollow interior, and a rotor core which is installed on an outer circumferential surface of the hollow shaft and has a plurality of magnets. Here, most hollow shafts are made of a pressed metal workpiece, and the rotor core is often press-fitted into the hollow shaft, which is the pressed product.

As such, when the rotor core is coupled to the hollow shaft by press-fitting or bonded to the shaft using an adhesive by another method, a high degree of numerical accuracy is required in the coupling process. If assembly tolerances are not within a precise range, it is difficult to maintain concentricity of the hollow shaft that rotates, and accordingly, the normal operation of the brake system may not be ensured.

In addition, Korean Patent No. 10-2634721 discloses a technology of coupling a rotor can around a magnet so as to prevent the magnet attached to an outer circumferential surface of a rotor core from dislodging.

According to the prior art, since an additional component needs to be installed on the outer circumferential surface of the rotor core, the assembly tolerances may occur and concentricity may not be maintained, as explained above. Furthermore, the number of manufacturing processes increases, thereby deteriorating the productivity.

Therefore, the present invention suggests a rotor of a hollow shaft motor capable of solving the above-mentioned problems by allowing the hollow shaft to be manufactured by die-casting instead of pressing.

### Summary of invention

### Technical task

It is an object of the present invention to provide a rotor for a hollow shaft motor that simplifies the manufacturing process and eliminates assembly tolerances when manufacturing a rotor for a hollow shaft motor.

It is another object of the present invention to provide a rotor for a hollow shaft motor capable of coupling magnets installed in the rotor core easily and firmly.

It is yet another object of the present invention to provide a rotor for a hollow shaft motor capable of improving productivity and lowering manufacturing costs by simplifying the assembly process.

The above objects and other inherent objects of the present invention may be easily achieved by the present invention described below.

### Means for solving technical task

A rotor of a hollow shaft motor according to the present invention comprises a rotor core 110 having a plurality of magnets 130; and a hollow shaft housing 120 formed around the rotor core 110 by injecting a molten metal into a die-casting mold in which the rotor core 110 is placed.

In the present invention, the hollow shaft housing 120 may comprise an upper core cover part 121 formed on an upper surface of the rotor core 110; an upper support part 122 formed in a cylindrical shape on an upper part of the upper core cover part 121; and an upper bearing support part 123 formed on an upper part of the upper support part 122.

In the present invention, a plurality of upper fixing points 121A may be formed at regular intervals on the upper core cover part 121 to expose both ends of the magnet inserted into the rotor core 110.

In the present invention, the hollow shaft housing 120 may comprise a lower core cover part 124 formed on a lower surface of the rotor core 110; a lower support part 125 formed on a lower part of the lower core cover part 124 and having a shape with a diameter decreasing towards the lower part; a lower bearing support part 126 formed in a cylindrical shape on a lower part of the lower support part 125; and a ball screw coupling part 126A formed on a lower end of the lower bearing support part 126.

In the present invention, a plurality of lower fixing points 124A may be formed at regular intervals on the lower core cover part 124 to expose both ends of the magnet of the rotor core.

In the present invention, a plurality of core fixing holes 124B may be formed at regular intervals on the lower core cover part 124.

In the present invention, a magnet support part 128 and a magnet end support part 128A may be formed around the magnet 130 of the rotor core 110, and a core inner support part 129 is formed on an inner circumferential surface of the rotor core 110.

In the present invention, an inner surface groove 111F may be formed on an inner circumferential surface of the rotor core 110.

A rotor of a hollow shaft motor according to the present invention, the rotor may comprise a rotor core 110 in which a plurality of magnets 130 are inserted in a magnet insertion part 111A; and a hollow shaft housing 120 formed around the rotor core 110 and around the magnet 130 inserted into the magnet insertion part 111A by injecting a molten metal into a die-casting mold in which the rotor core 110 is placed.

In the present invention, the hollow shaft housing 120 may comprise an upper core cover part 121 formed on an upper surface of the rotor core 110; an upper support part 122 formed in a cylindrical shape on an upper part of the upper core cover part 121; and an upper bearing part 123 formed on an upper part of the upper support part 122.

In the present invention, a plurality of upper fixing points 121A may be formed at regular intervals on the upper core cover 121 to expose both ends of the magnet inserted into the rotor core 110.

In the present invention, the hollow shaft housing 120 may comprise a lower core cover part 124 formed on a lower surface of the rotor core 110; a lower support part 125 formed on a lower part of the lower core cover part 124 and having a shape with a diameter decreasing towards the lower part; a lower bearing support part 126 formed in a cylindrical shape on a lower part of the lower support part 125; and a ball screw coupling part 126A formed on a lower end of the lower bearing support part 126.

In the present invention, a plurality of lower fixing points 124A may be formed at regular intervals on the lower core cover part 124 to expose both ends of the magnet of the rotor core.

In the present invention, a plurality of core fixing holes 124B may be formed at regular intervals on the lower core cover part 124.

In the present invention, a magnet support part 128 and a magnet end support part 128A may be formed around the magnet 130 of the rotor core 110, and a core inner support part 129 may be formed on an inner circumferential surface of the rotor core 110.

### Effect of invention

The present invention provides a rotor for a hollow shaft motor with a more precise structure and good concentricity by eliminating assembly tolerances that occur when assembling the hollow shaft housing and the rotor core.

Also, the present invention is capable of eliminating assembly tolerances of the magnets while coupling the magnets installed in the rotor core firmly and easily.

Further, the present invention has an effect of providing a rotor for a hollow shaft motor with high quality, improved productivity, reduced manufacturing costs, and enhanced structural precision, by simplifying the assembly process.

### Brief description of drawings

Fig. 1 is a top perspective view illustrating a hollow shaft motor to which a rotor according to the present invention is applied;
Fig. 2 is a bottom perspective view illustrating a hollow shaft motor to which a rotor according to the present invention is applied;
Fig. 3 is a top perspective view illustrating a rotor according to the present invention;
Fig. 4 is a bottom perspective view illustrating a rotor according to the present invention;
Fig. 5 is a top perspective view illustrating the rotor core and the die-cast hollow shaft housing separated, applied to a rotor according to the present invention;
Fig. 6 is a bottom perspective view illustrating the rotor core and the die-cast hollow shaft housing separated in a rotor according to the present invention; Fig. 7 is a plan view illustrating the rotor core of a rotor according to the present invention;
Fig. 8 is an exploded perspective view illustrating the rotor core of a rotor according to the present invention;
Fig. 9 is an exploded perspective view illustrating a rotor core and a magnet in a rotor according to the present invention;
Fig. 10 is a plan view illustrating the core body of the rotor core in a rotor according to the present invention; and
Fig. 11 is a plan view illustrating a lower cover member or an upper cover member in a rotor according to the present invention.

Hereinafter, the present invention will be described in detail with reference to the accompanying drawings.

### Best mode for carrying out the invention

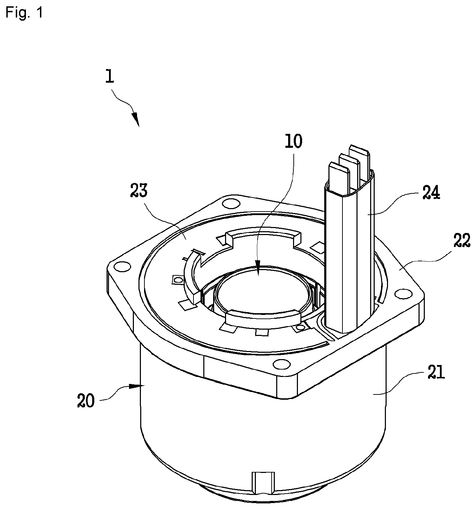

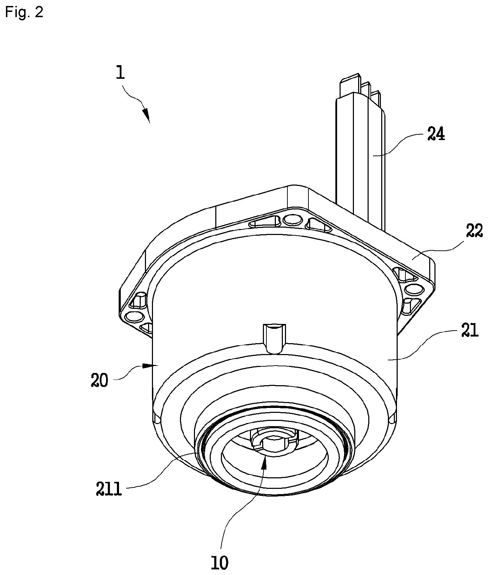

Fig. 1 is a top perspective view illustrating a hollow shaft motor 1 to which a rotor 10 according to the present invention is applied. Fig. 2 is a bottom perspective view illustrating a hollow shaft motor 1.

As illustrated in Figs. 1 and 2, the rotor 10 according to the present invention constitutes the hollow shaft motor 1 together with the motor housing 20. In other words, the hollow shaft motor 1 comprises a rotor 10 and a motor housing 20. The rotor 10 is placed inside the motor housing 20 and is rotatably coupled to the inside of the motor housing 20.

The motor housing 20 comprises a housing body 21, a flange 22 formed on an upper part of the housing body 21 extending outwardly, a busbar body 23 coupled to an upper part of the housing body 21, and a terminal cover 24 coupled to one side of the busbar body 23 to be connected to an external power source.

The housing body 21 is provided with a stator (not shown), and a rotor 10 is placed inside the housing body 21 so that when power is applied to the stator, the rotor 10 rotates as the magnet 130 installed in the rotor 10 is affected by the changing magnetic field generated by the stator. The rotation of the upper and lower parts of the rotor 10 are supported by the bearings (not shown) in the busbar body 23 and/or the housing body 21. A lower protrusion 211 is formed on a lower end of the housing body 21 protruding downwardly, and a lower part of the rotor 10 is exposed inwardly of the lower protrusion 211. A cover (not shown) covering this exposed part may be coupled to the lower protrusion 211.

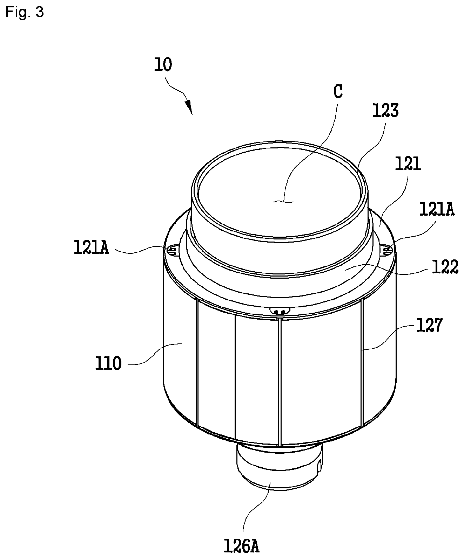

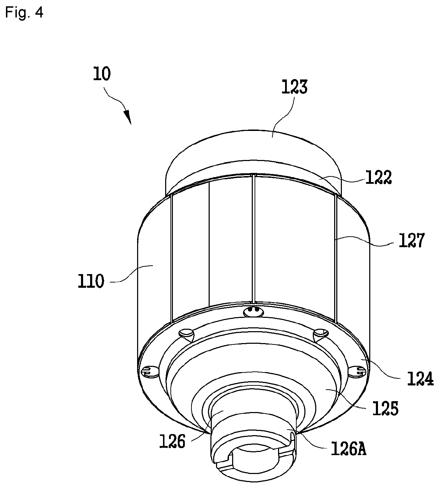

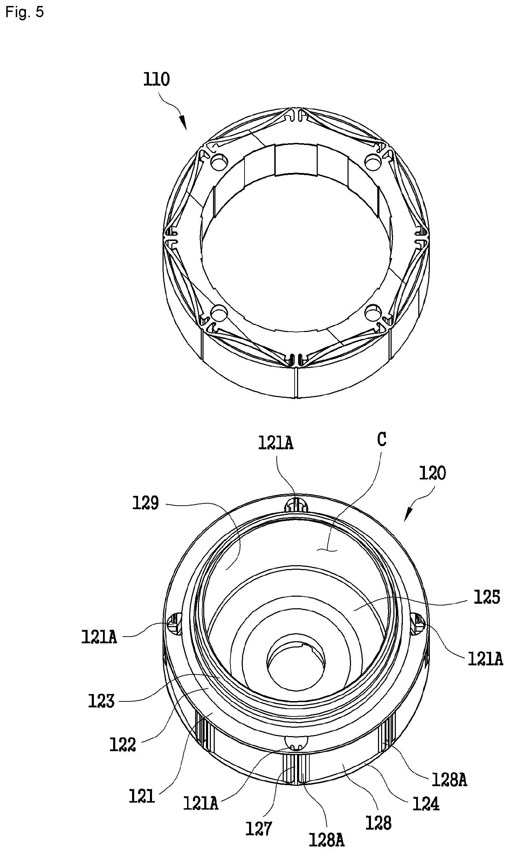

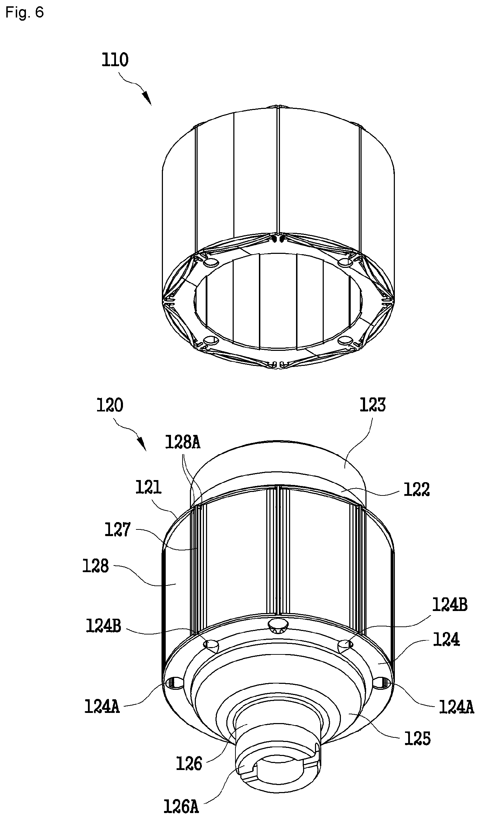

Fig. 3 is a top perspective view illustrating a rotor 10 according to the present invention. Fig. 4 is a bottom perspective view illustrating a rotor 10. Fig. 5 is a top perspective view separating the rotor core 110 and the hollow shaft housing 120, applied to a rotor according to the present invention. Fig. 6 is a bottom perspective view separating the rotor core 110 and the hollow shaft housing 120.

Referring to Figs. 3 to 6 together, the rotor 10 of the hollow shaft motor according to the present invention comprises a rotor core 110 and a hollow shaft housing 120 formed around the rotor core 110. The inner space of the rotor core 110 and the hollow shaft housing 120 is a hollow part C, which is a space for placing a ball screw (not shown) and a ball nut (not shown).

The rotor core 110 comprises a core body 111 manufactured by stacking a plurality of laminar members 111' molded by press processing from thin electrical steel sheets, and a plurality of magnets 130 installed on the core body 111. The detailed structure of the rotor core 110 will be described again in the following.

The hollow shaft housing 120 is manufactured by placing the rotor core 110 in a die-casting mold and then injecting a metal melt into the mold. The metal melt used as the die-casting material may suitably be an alloy of copper, zinc, aluminum, tin, magnesium, or the like.

As such, the hollow shaft housing 120 formed in the rotor core 110 by die-casting comprises a ring-shaped upper core cover part 121 formed on an upper surface of the rotor core 110, a cylindrical-shaped upper support part 122 formed by extending upwardly from the upper core cover part 121, and a cylindrical-shaped upper bearing support part 123 formed by extending upwardly from the upper support part 122.

Also, the hollow shaft housing 120 comprises a ring-shaped lower core cover part 124 formed on a lower surface of the rotor core 110, a lower support part 125 extending downwardly from the lower core cover part 124 and having a shape with a diameter decreasing towards the lower part, and a cylindrical-shaped lower bearing support part 126 formed by extending downwardly from the lower support part 120. A ball screw coupling part 126A to which a ball screw (not shown) is coupled is formed at a lower end of the lower bearing support part 126.

The core outer support part 127 is formed along the outer surface grooves 111D, 112D, 113D formed on an outer circumferential surface of the rotor core 110, and the core outer support part 127 vertically connects the upper core cover part 121 and the lower core cover part 124.

The magnet support part 128 provides a coupling force between the magnet 130 and the rotor core 110 while supporting an outer diameter surface of the magnet 130 inserted into the rotor core 110. Magnet end support parts 128A providing coupling force with the rotor core 110 while supporting both ends of the magnet 130 are formed at both ends of the magnet support part 128. The core inner support part 129 is formed on an inner circumferential surface of the rotor core. The magnet support part 128, the magnet end support part 128A, and the core inner support part 129, together with the core outer support part 127, vertically connect the upper core cover part 121 and the lower core cover part 124.

A plurality of upper fixing points 121A are formed on the upper core cover part 121. A plurality of lower fixing points 124A and rotor core fixing holes 124B are formed on the lower core cover part 124.

The upper fixing point 121A is formed in the shape of a hole so that part of the bridge 113-3 of the upper cover member 113 configuring the rotor core 110 is exposed. Through the upper fixing point 121A, it is possible to confirm with the naked eye whether the material melt is fully filled around the bridge 113-3, ensuring that the magnet support part 128 and the magnet end support part 128A are well formed. Similarly, the lower fixing point 124A is formed in the shape of a hole to expose part of the bridge 112-3 of the lower cover member 112 configuring the rotor core 110. Through the lower fixing point 124A, it is possible to confirm with the naked eye whether the material melt is fully filled around the bridge 112-3, ensuring that the magnet support part 128 and the magnet end support part 128A are well formed.

The rotor fixing holes 124B are formed to communicate with the rotor core fixing holes 111C, 112C of the rotor core 110. Since the pins of the die-casting mold are inserted into the rotor core fixing holes 111C, 112C to allow the rotor core 110 to be fixed within the mold, the rotor fixing holes 124B are formed to communicate with the rotor core fixing holes 111C, 112C in the lower core cover part 124. All parts of the hollow shaft housing 120 are integrally formed as a single member through a die-casting process using molten metal.

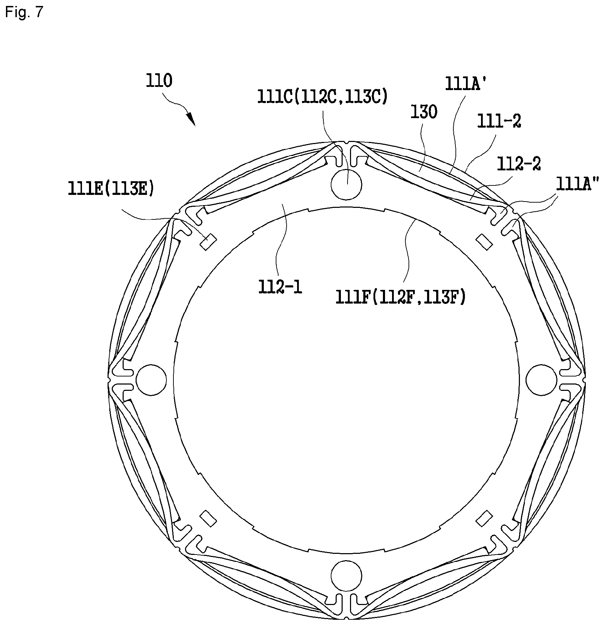

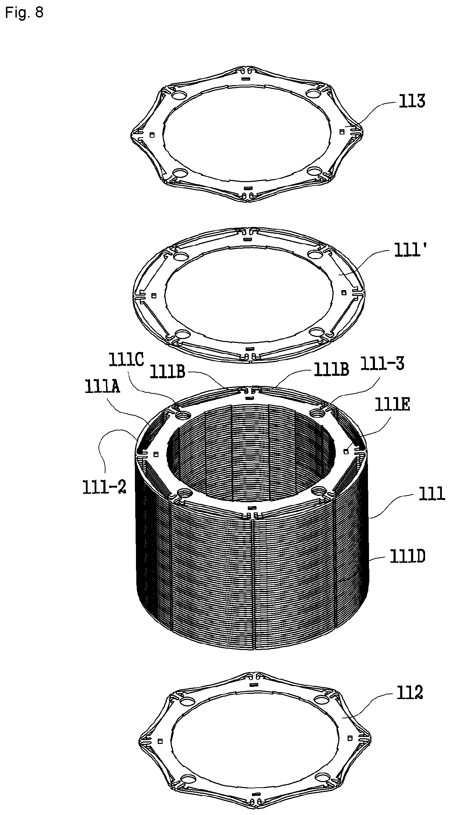

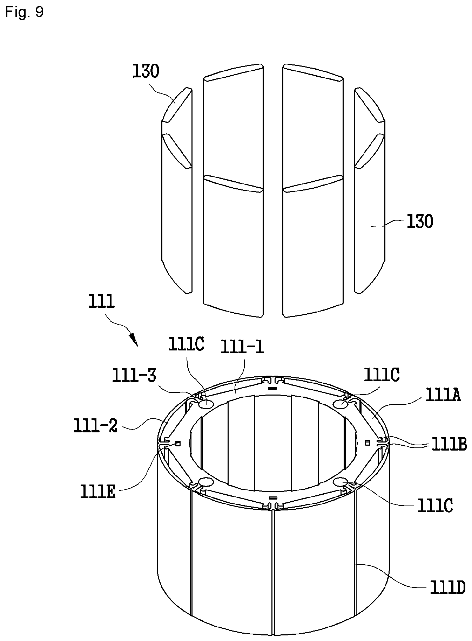

Fig. 7 is a plan view illustrating the rotor core 110 of a rotor 10 according to the present invention. Fig. 8 is an exploded perspective view illustrating the rotor core 110 of a rotor 10 according to the present invention. Fig. 9 is an exploded perspective view illustrating a rotor core 110 and a magnet 130 in a rotor 10 according to the present invention.

As illustrated in Figs. 7 to 9, the rotor core 110 of the present invention comprises a core body 111, a lower cover member 112, an upper cover member 113, and a magnet 130.

The core body 111 is manufactured by stacking a plurality of laminar members 111' molded by press processing. The core body 111 comprises an inner body 111-1 and an outer frame 111-2, and the inner body 111-1 and the outer frame 111-2 are connected by a plurality of bridges 111-3 formed at regular intervals.

The space formed by the inner body 111-1, the outer frame 111-2, and the bridge 111-3 becomes the magnet insertion part 111A, which is formed by being penetrated vertically.

Each magnet 130 is inserted into the magnet insertion part 111A, and coupled to an outer surface of the inner body 111-1. A pair of magnet fixing protrusions 111B may be formed on the inner body 111-1 for each magnet insertion part 111A to support both circumferential sides of the magnet 130 in the magnet insertion part 111A. Thus, with a magnet 130 inserted in the magnet insertion part 111A, the inner surface of the magnet 130 is in contact with an outer surface of the inner body 111-1, and both circumferential sides of the magnet 130 are supported by the magnet fixing protrusions 111B.

A gap 111A', which is a certain distance apart, is formed between the outer surface of the magnet 130 installed in the magnet insertion part 111A and the inner surface of the outer frame 111-2. Also, a both-side passage 111A" is formed between both circumferential sides of the magnet 130 and the bridge 111-3. When forming the hollow shaft housing 120, the magnet support part 128 is formed by filling the gap 111A' with a metal melt, which is a die-casting material. In addition, the magnet end support part 128A is formed by filling the both-side passage 111A" with the metal melt.

A plurality of rotor fixing holes 111C formed vertically are formed in the inner body 111-1 of the core body 111. The rotor fixing holes 111C are formed so that a pin of the mold is inserted to fix the rotor core 110 while die-casting. In Fig. 7, four rotor fixing holes 111C are formed in a symmetrical position, spaced 90 degrees apart with respect to the center axis of the rotor core 110, but the number or position of rotor fixing holes 111C is not particularly limited. It is preferable to form at least three rotor fixing holes 111C in a position symmetrical to each other. Also, the rotor fixing holes 111C may be formed to be penetrated vertically, may be formed with holes only in the downward direction, or may be formed in a certain depth in each of the downward and upward directions, as needed.

An outer surface groove 111D is a groove vertically formed on an outer side of the outer frame 111-2 of the core body 111. The core outer support part 127 is formed when the metal melt, which is a die-casting material, is filled in the outer surface groove 111D.

An embossing 111E is formed to ensure that the laminar members 111' are coupled to each other while being stacked. The embossing 111E may be omitted as needed, and the coupling of the laminar members may be made by bonding or adhesive coating, or the like. In particular, a self-bonding (SB) electrical steel plate having an adhesive coating layer pre-formed on the surface of the electrical steel plate, which is a base material from which the laminar members 111' are manufactured, may be used. In this case, since a high temperature environment is provided in the die-casting mold, the adhesive coating layer may have an effect of being partially hardened during the die-casting molding process.

An inner surface groove 111F is a groove for preventing the part made by die-casting from dislodging when the rotor 10 rotates while increasing the coupling force when the metal melt, which is a die casting material, forms the inner core support part 129 in the inner circumferential surface of the rotor core 110. That is, the inner core support part 129 may be formed in the inner circumferential surface of the rotor core 110 while the metal melt fills the inner surface groove 111F. In other words, the inner core support part 129 may be formed around the entire inner surface groove 111F and the inner circumferential surface of the rotor core 110. Thus, the inner space of the inner core support part 129 forms a hollow part C. As such, the inner core support part 129 may increase the coupling force between the rotor core 110 and the hollow shaft housing 120 of the rotating rotor 10.

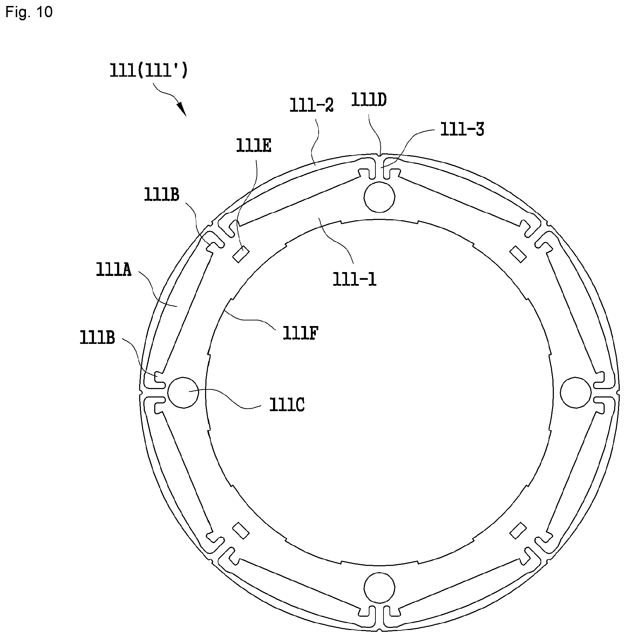

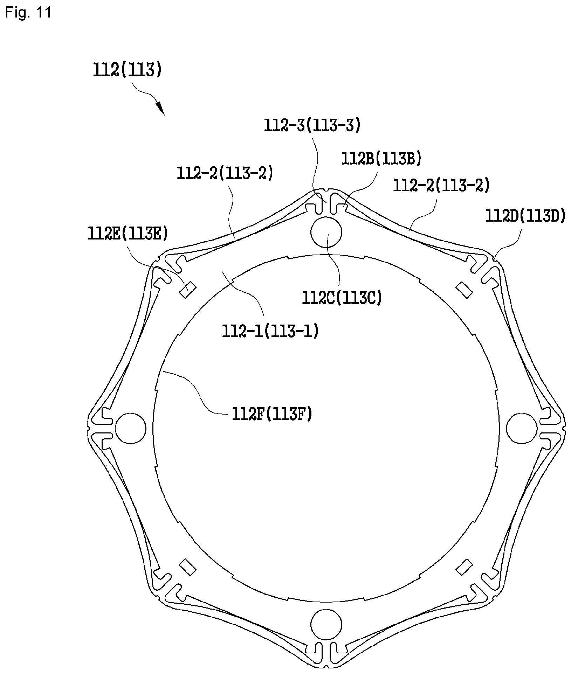

Fig. 10 is a plan view illustrating the core body 111 of the rotor core in a rotor according to the present invention. Fig. 11 is a plan view illustrating a lower cover member 112 or an upper cover member 113 in a rotor according to the present invention.

Referring to Figs. 10 to 11 together, the rotor core 110 of the present invention comprises a lower cover member 112, a core body 111 stacked with a plurality of laminar members 111', and an upper cover member 113.

The lower cover member 112, the plurality of laminar members 111', and the upper cover member 113 may be manufactured by processing an electrical steel plate by a progressive mold in a single press device.

A plurality of laminar members 111' are stacked to form a core body 111. The laminar member 111' has an inner body 111-1 and an outer frame 111-2, and a plurality of bridges 111-3 are formed at regular intervals to connect the inner body 111-1 and the outer frame 111-2. The magnet insertion part 111A is formed in the space between the inner body 111-1, the outer frame 111-2, and the bridge 111-3. A plurality of magnet fixing protrusions 111B are formed on an outer surface of the inner body 111-1 to fix the magnet 130.

A plurality of rotor core fixing holes 111C are formed at regular intervals in the inner body 111-1. The rotor core fixing holes 111C may be formed throughout the laminar members 111' configuring the core body 111, but may also be formed in only part of the laminar members 111'. A plurality of outer surface grooves 111D are formed in the outer frame.

An embossing 111E is formed by press processing to couple the laminar members with each other, having a downwardly protruding shape while upwardly providing a coupling groove. Thus, the embossing 111E of one laminar member 111' is coupled to the embossing 111E of a laminar member 111' therebelow. The embossing 111E may be omitted when the coupling between the laminar members is made by bonding or other methods.

A plurality of laminar members 111' are stacked on the inner side of the inner body 111-1 of the laminar member 111', so that the inner surface grooves 111F are formed vertically on the inner surface of the rotor core 110.

The lower cover member 112 and the upper cover member 113 may be manufactured in the same press mold as the laminar member 111'. The lower and upper cover members 112, 113 may be manufactured by pressing the outer frame 112-2 of the laminar member 111' molded in the press mold with a device such as a side press, or the like so that the outer frame 111-2, 113-2 is molded to cover a part of the magnet insertion part 111A of the laminar member 111'. Thus, the outer frame 111-2, 111-3 may prevent the magnet inserted in the magnet insertion part 111A of the rotor core 110 from being dislodged upwardly or downwardly during die-casting molding.

A lower cover member 112 molded in a press mold is placed on the very bottom, a core body 111 on which a plurality of laminar members 111' are stacked is placed thereon, and an upper cover member 113 is stacked and coupled on an upper part of the core body 111. The shape of the lower and upper cover members 112, 113 is completed by pressing the outer frames 112-3, 113-2 of the lower and upper cover members 112, 113 by a device such as a side press, while the magnet 133 is inserted in the magnet insertion part 111A, so that the outer frames 112-2, 113-2 are bent towards the inner body 112-1, 113-1.

An embossing coupling hole 112E is formed at a position corresponding to the embossing 111E of the laminar member 111' on the lower cover member 112. Thus, a laminar member 111' may be stacked and coupled on an upper part of the lower cover member 112. The embossing 113E is formed at a position corresponding to the embossing 111E of the laminar member 111' on the upper cover member 112. Thus, the embossing 113E of the upper cover member 113 may be coupled to the embossing 111E of the laminar member 111' placed on the uppermost part of the core body 111. When the structure does not apply the lower cover member 112 and the upper cover member 113, the embossing 111E of the laminar member 111' placed at the very bottom is molded into an embossing coupling hole by piercing molding.

It should be noted that the description of the present invention described above is merely an example for understanding the present invention, and is not intended to limit the scope of the present invention. It should be construed that the scope of the present invention is defined by the appended claims, and all modifications and alternations of the present invention fall within the protection scope of the present invention.

## Claims

1. A rotor of a hollow shaft motor, comprising:
a rotor core 110 having a plurality of magnets 130; and
a hollow shaft housing 120 formed around the rotor core 110 by injecting a molten metal into a die-casting mold in which the rotor core 110 is placed.

2. The rotor of claim 1, wherein the hollow shaft housing 120 comprises:
an upper core cover part 121 formed on an upper surface of the rotor core 110;
an upper support part 122 formed in a cylindrical shape on an upper part of the upper core cover part 121; and
an upper bearing support part 123 formed on an upper part of the upper support part 122.

3. The rotor of claim 2, wherein a plurality of upper fixing points 121A are formed at regular intervals on the upper core cover part 121 to expose both ends of the magnet inserted into the rotor core 110.

4. The rotor of claim 1, wherein the hollow shaft housing 120 comprises:
a lower core cover part 124 formed on a lower surface of the rotor core 110;
a lower support part 125 formed on a lower part of the lower core cover part 124 and having a shape with a diameter decreasing towards the lower part;
a lower bearing support part 126 formed in a cylindrical shape on a lower part of the lower support part 125; and
a ball screw coupling part 126A formed on a lower end of the lower bearing support part 126.

5. The rotor of claim 4, wherein a plurality of lower fixing points 124A are formed at regular intervals on the lower core cover part 124 to expose both ends of the magnet of the rotor core.

6. The rotor of claim 4, wherein a plurality of core fixing holes 124B are formed at regular intervals on the lower core cover part 124.

7. The rotor of claim 1, wherein a magnet support part 128 and a magnet end support part 128A are formed around the magnet 130 of the rotor core 110, and a core inner support part 129 is formed on an inner circumferential surface of the rotor core 110.

8. The rotor of claim 7, wherein an inner surface groove 111F is formed on an inner circumferential surface of the rotor core 110.

9. A rotor of a hollow shaft motor, comprising: a rotor core 110 in which a plurality of magnets 130 are inserted in a magnet insertion part 111A; and
a hollow shaft housing 120 formed around the rotor core 110 and around the magnet 130 inserted into the magnet insertion part 111A by injecting a molten metal into a die-casting mold in which the rotor core 110 is placed.

10. The rotor of claim 9, wherein the hollow shaft housing 120 comprises:
an upper core cover part 121 formed on an upper surface of the rotor core 110;
an upper support part 122 formed in a cylindrical shape on an upper part of the upper core cover part 121; and
an upper bearing part 123 formed on an upper part of the upper support part 122.

11. The rotor of claim 10, wherein a plurality of upper fixing points 121A are formed at regular intervals on the upper core cover 121 to expose both ends of the magnet inserted into the rotor core 110.

12. The rotor of claim 9, wherein the hollow shaft housing 120 comprises:
a lower core cover part 124 formed on a lower surface of the rotor core 110;
a lower support part 125 formed on a lower part of the lower core cover part 124 and having a shape with a diameter decreasing towards the lower part;
a lower bearing support part 126 formed in a cylindrical shape on a lower part of the lower support part 125; and
a ball screw coupling part 126A formed on a lower end of the lower bearing support part 126.

13. The rotor of claim 12, wherein a plurality of lower fixing points 124A are formed at regular intervals on the lower core cover part 124 to expose both ends of the magnet of the rotor core.

14. The rotor of claim 12, wherein a plurality of core fixing holes 124B are formed at regular intervals on the lower core cover part 124.

15. The rotor of claim 13, wherein a magnet support part 128 and a magnet end support part 128A are formed around the magnet 130 of the rotor core 110, and a core inner support part 129 is formed on an inner circumferential surface of the rotor core 110.
